Europäisches Patentamt

European Patent Office

Office européen des brevets

(19)

(11) Numéro de publication: **0 155 208**
**B1**

(12) **FASCICULE DE BREVET EUROPÉEN**

(45) Date de publication du fascicule du brevet:
**02.09.87**

(21) Numéro de dépôt: **85400304.3**

(22) Date de dépôt: **20.02.85**

(51) Int. Cl.⁴: **B 01 F 17/00,** B 01 F 17/36,
B 01 F 17/42, C 02 F 1/40

(54) Compositions tensio-actives utilisables notamment pour disperser une nappe d'huile à la surface de l'eau.

(30) Priorité: **12.03.84 FR 8403891**

(43) Date de publication de la demande:
**18.09.85 Bulletin 85/38**

(45) Mention de la délivrance du brevet:
**02.09.87 Bulletin 87/36**

(84) Etats contractants désignés:
**BE DE GB IT NL SE**

(56) Documents cité:
**EP-A-0 106 526**
**GB-A-2 121 779**

(73) Titulaire: **INSTITUT FRANCAIS DU PETROLE, 4,
Avenue de Bois- Préau, F-92506 Rueil- Malmaison
Cédex (FR)**

(72) Inventeur: **Castaing, Gilles, Ile de France, 85,
avenue Lenine, F-92000 Nanterre (FR)**
Inventeur: **Bocard, Christian, 22, avenue du
Maréchal Foch, F-78630 Orgeval (FR)**

## 0 155 208

**Description**

La présente invention concerne de nouvelles formulations tensioactives utilisables pour épurer les eaux douces et marines des pollutions d'origine pétrolière provoquées par des accidents (navires, barges, installations de forage ou de production de pétrole en mer) ou des rejets liés à l'activité pétrolière.

Pour lutter contre ces pollutions, on peut faire appel à des techniques physico-mécaniques permettant de collecter un film d'huile à la surface de l'eau. De telles techniques ne sont cependant pas toujours utilisables, en particulier lorsque la surface de l'eau est trop agitée, et permettent rarement de récupérer la totalité du polluant.

On est donc souvent conduit à laisser tout ou partie du polluant dans le milieu. Pour éviter qu'un film d'hydrocarbures à la surface de l'eau vienne polluer une berge ou une côte, entraîné par les courants ou poussé par le vent, et pour conditionner ces hydrocarbures sous une forme physique plus favorable à leur dégradation par les bactéries du milieu, on peut utiliser la technique dite de dispersion qui consiste à assurer le fractionnement du film d'huile en gouttelettes qui sont dispersées dans le volume d'eau jusqu'à une profondeur qui dépend à la fois de l'état d'agitation de la surface de l'eau et des mouvements internes de la masse d'eau, tels nue les courants verticaux et les courants horizontaux stratifiés.

La dispersion d'un film d'huile à la surface de l'eau est effectuée en appliquant sur ce film une formulation d'agents tensio-actifs qui, en abaissant la tension interfaciale huile-eau, favorisent la formation de gouttelettes d'huile, qui ne se formeraient pas naturellement de façon stable sous l'effet de l'énergie apportée par l'agitation de la surface de l'eau.

Diverses formulations tensio-actives ont été proposées pour disperser une nappe d'huile. Seules ne peuvent être retenues que les formulations qui ne présentent pas une trop grande toxicité vis-à-vis de la faune aquatique. En général, les autorités des pays susceptibles d'utiliser des formulations dispersantes fixent un seuil de toxicité (la toxicité étant mesurée selon une procédure d'essai qu'elles ont définie) que ne doivent pas dépasser lesdites formulations pour pouvoir être utilisées légalement.

Parmi les formulations dispersantes ne présentant pas une toxicité trop forte, certaines ont une efficacité relativement faible, en ce sens qu'elles n'assurent pas la formation d'une émulsion suffisamment stable pour que la dilution des gouttelettes d'huile par les mouvements d'eau entraîne la dispersion effective du polluant, ou que ce résultat n'est obtenu qu'en présence d'une énergie d'agitation très élevée, ce qui n'est généralement pas le cas. Par ailleurs, dans certains cas, les agents tensio-actifs de ces formulations, ou une partie d'entre eux, diffusent trop rapidement dans l'eau ce qui diminue fortement l'efficacité de la formulation.

L'expérience acquise lors de traitements de nappes de pétrole en mer montre que la dispersion effective des hydrocarbures nécessite l'emploi de produits très efficaces susceptibles d'agir sur des huiles visqueuses constituées par exemple par des résidus résultant de l'évaporation des fractions les plus légères des pétroles bruts. L'efficacité des formulations dispersantes peut être mesurée dans des tests de laboratoire. On citera par exemple le test en ampoule tournante du Warren Spring Laboratory ("A specification for oil spill dispersants", Warren Spring Laboratory Report No LR 448-OP)-noté ci-dessous "test WSL"-et le test en dilution avec batteur de surface de l'Institut Français du Pétrole ("Chemical oil dispersion in trials at sea and laboratory test: the key-role of dilution processes", Symposium on oil spill dispersants, 1982, American Society for Testing Materials) noté ci-dessous "test IFP". Dans le premier test, l'efficacité d'une formulation dispersante est mesurée par le taux d'huile émulsionnée après un certain temps de rotation de l'ampoule. Dans le second test, l'efficacité est mesurée par le taux d'huile entraînée hors du système par un courant d'eau, après 2 heures de fonctionnement. On notera qu'étant effectués dans des conditions différentes, les deux tests sont complémentaires et qu'il y a intérêt à mesurer l'efficacité de formulations dispersantes dans ces deux tests.

La présente invention est relative à des formulations dispersantes présentant une efficacité élevée dans les deux tests mentionnés ci-dessus. Ces formulations sont constituées par un mélange de composés tensio-actifs non ioniques et anionique et d'un solvant.

Des formulations dispersantes de ce type ont déjà été décrites antérieurement. On citera en particulier le brevet US-A-3 793 218, dans lequel le mélange de tensio-actifs est constitué par du mono-oléate de sorbitol, du mono-oléate de sorbitol polyéthoxylé et un dialkylsulfosuccinate de sodium sous forme d'une solution aqueuse à 75 % en poids. La proportion de ce dernier composé est comprise entre 25 % et 35 % en poids sec dans le mélange.

Par ailleurs, la demande de brevet français 2 515 062 décrit l'utilisation de compositions dispersantes dans lesquelles la partie active est constituée par un mélange de composés tensio-actifs identiques à ceux décrits dans le brevet US-A-3 793 218, la proportion de dialkylsulfosuccinate (en particulier le dioctylsulfosuccinate de sodium) étant comprise entre 35 et 40 % en poids sec dans le mélange.

La présente invention concerne des formulations dispersantes très efficaces dont la partie active est aussi constituée d'esters gras du sorbitol et de dialkylsulfosuccinate de sodium. Mais il a été trouvé que l'on peut obtenir des formulations plus efficaces que celles décrites en ajoutant à la composition un hexaester du sorbitol polyéthoxylé. L'ajout d'un tel constituant permet d'autre part de diminuer avantageusement la proportion du tensio-actif anionique, qui est connu pour être plus toxique vis-à-vis de la faune aquatique que les composés non ioniques du type esters de sorbitol polyéthoxylés.

D'une manière générale, les formulations dispersantes selon l'invention comprennent
- une proportion majeure, de préférence au plus 75 % en poids, d'un mélange de composés tensio-actifs (1) comprenant au moins un monoester d'acide gras et de sorbitol, au moins un monorster d'acide gras et de

2

sorbitol polyéthoxylé, au moins un hexaester d'acide gras et de sorbitol polyéthoxylé et au moins un dialkylsulfosuccinate de sodium, introduit en général sous la forme d'une solution hydroalcoolique contenant de 65 à 75 % en poids de sel;

- et une proportion mineure, de préférence au moins 25 % en poids, d'un mélange de solvants (2) comprenant de l'eau et au moins un solvant organique dans lequel le rapport pondéral de l'eau audit solvant organique est par exemple compris entre 50:50 et 10:90.

Dans le mélange (1), la proportion de dialkylsulfosuccinate de sodium est comprise entre 20 et 25 % en poids sec par rapport au poids total du mélange, tandis que le rapport pondéral de l'hexaester de sorbitol polyéthoxylé au mélange des deux monoesters de sorbitol est compris entre 10:90 et 70:30, de préférence entre 20:80 et 50:50, et que le rapport pondéral du monoester de sorbitol au monoester de sorbitol polyéthoxylé est compris entre 30:70 et 70:30, de préférence entre 40:60 et 60:40.

L'acide gras estérifiant le sorbitol est généralement un acide monocarboxylique aliphatique saturé ou non, contenant de 12 à 22 atomes de carbone. On peut citer des acides monocarboxyliques aliphatiques saturés tels que par exemple l'acide dodécanoïque (ou laurique), l'acide tétradécanoïque (ou myristique), l'acide hexadécanoïque (ou palmitique), l'acide octadécanoïque (ou stéarique), l'acide eicosanoïque (ou arachidique), l'acide docosanoïque (ou béhénique), ou des acides monocarboxyliques insaturés, tels que par exemple l'acide dodécénoïque (ou lauroléique), l'acide tétradécénoïque (ou myristoléique), l'acide hexadénénoïque (ou palmitoléique), les acides insaturés en $C_{18}$ (l'acide oléique, l'acide élaïdique, ainsi que les acides linoléique et linolénique, ou encore l'acide ricinoléique), l'acide eicosénoïque et l'acide docosénoïque (érucique ou brassidique). On peut, bien entendu, utiliser des mélanges de ces acides, en particulier ceux qui proviennent d'huiles ou de graisses d'origine végétale ou animale. On utilisera avantageusement l'acide oléique ou des coupes d'acides gras aliphatiques contenant au moins 60 % en poids d'acide oléique.

Le monoester de sorbitol polyéthoxylé peut résulter par exemple de la condensation d'environ 20 moles d'oxyde d'éthylène par mole d'ester. En particulier dans le cas du monooléate, le HLB du produit de condensation est d'environ 15.

L'hexaester de sorbitol polyéthoxylé dont la mise en jeu permet d'obtenir, selon l'invention, une formulation dispersante plus efficace dérive d'un acide gras de 12 à 22 aromes de carbone, de préférence l'acide oléique, et renferme un nombre de groupements éthoxy tel que le HLB du produit est compris entre 10 et 12.

En ce qui concerne le tensio-actif anionique, on utilisera avantageusement le di(éthyl-2 hexyl) sulfosuccinate de sodium, en solurion dans un mélange d'eau et d'éthanol ou d'isopropanol, le rapport pondéral eau/alcool pouvant être par exemple d'environ 70/30.

Le solvant entrant dans la composition des formulations dispersantes selon l'invention peut être en particulier un monoalkyléther (alkyl de $C_1$ à $C_6$) d'éthyléneglycol ou de polyéthyléneglycol, ou encore un liquide hydrocarboné.

Pour les solvants du premier groupe, on citera à titre d'exemples les monoéthers éthylique, propylique, isopropylique et butylique de l'éthylèneglycol et du diéthylèneglycol.

On utilisera cependant avantageusement un solvant constitué par un mélange d'hydrocarbures, qui favorise la pénétration des tensioactifs dans la nappe d'huile et confère à la formulation une efficacité dispersante accrue. Un tel solvant est constitué par exemple par une coupe pétrolière distillant entre 200 et 250° C ou entre 210 et 240° C, de densité voisine de 0,8, ayant une teneur en aromatiques inférieure à 5 %.

Les formulations préparées selon l'invention ont un point d'éclair supérieur à 65° C et une viscosité comorise entre 70 et 130 mPa.s à 10° C, ce qui permet de les appliquer facilement par pulvérisation sur une nappe. (Le millipascal seconde est l'unité qui, dans le système International, correspond à l'ancien centipoise).

L'invention est illustrée par les exemples suivants, non limitatifs.

### Exemple 1

On prépare une formulation A dispersante ayant la composition suivante:

Mélange (1): 65 % poids, à savoir:

| | |
|---|---|
| - monooléate de sorbitol | 13 % poids |
| - monooléate de sorbitol polyéthoxylé (HLB 15) | 13 % poids |
| - hexaoléate de sorbitol polyéthoxylé (HLB 11,4) | 16 % poids |
| - di(éthyl-2 hexyl) sulfosuccinate de sodium en solution à 70 % poids dans un mélange eau-éthanol·70/30 | 23 % poids |

Mélange (2): 35 % poids, à savoir

| | |
|---|---|
| - monobutyléther de diéthylèneglycol | 22 % poids |
| - eau | 13 % poids |

Le di(éthyl-2 hexyl) sulfosuccinate de sodium représente un peu moins 10 de 25 % en poids de produit sec

3

par rapport au mélange (1).

L'efficacité de cette formulation A a été évaluée sur un fuel de viscosité 1800 mPa.s à 10°C, température des essais, ainsi que sur un fuel de viscosité 75 mPa.s à 10°C, selon les tests IFP et WSL décrits plus haut. Les résultats sont portés dans le tableau 1, qui fait apparaître également, à titre de comparaison, l'efficacité de la formulation B obtenue en remplaçant dans A l'hexaoléate de sorbitol polyéthoxylé par une même quantité pondérale d'un mélange 50:50 en poids du monooléate de sorbitol et du monooléate de sorbitol polyéthoxylé utilisés dans la formulation A.

## Exemple 2

On prépare une formulation C identique à la formulation A, sauf en ce qui concerne le solvant qui est une coupe pétrolière 210-235°C à 3 % d'aromatiques (d = 0,802) en remplacement du monobutyléther de diéthylèneglycol. Cette formulation présente un aspect parfaitement limpide. Testée sur les mêmes fuels que dans l'exemple 1, cette formulation donne les résultats portés dans le tableau 1.

### Tableau 1

|  | Efficacité | |
| --- | --- | --- |
|  | Test IFP | Test WSL |
| **Fuel 1800 mPa.s** | | |
| Formulation A | 48 % | 75 % |
| Formulation B* | 40 % | 58 % |
| Formulation C | 57 | % 87 % |
| **Fuel 75 mPa.s** | | |
| Formulation A | 67 % | 40 % |
| Formulation B* | 59 % | 34 % |
| Formulation C | 71 % | 40 % |
| * Comparaison | | |

Ces résultats montrent l'avantage d'utiliser l'hexa-oléate de sorbitol polyéthoxylé pour obtenir une formulation plus efficace, ainsi que l'avantage de la formulation contenant un solvant pétrolier pour disperser l'huile la plus visqueuse.

## Exemples 3 et 4

On prépare deux formulations D et E, analogues à la formulation A de l'exemple 1, en ce qui concerne les proportions respectives des mélanges (1) et (2) et la composition du mélange (2).

En revanche, les proportions (en % poids) des tensio-actifs non-ioniques du mélange (1) diffèrent, à savoir:

| Formulation | D | E |
| --- | --- | --- |
| monooléate de sorbitol | 14 % | 12 % |
| monooléate de sorbitol polyéthoxylé (HLB 15) | 19 % | 9 % |
| hexaoléate de sorbitol polyéthoxylé (HLB 11,4) | 9 % | 21 % |
| di(éthyl-2 hexyl) sulfosuccinate de sodium en solution à 70 % poids dans un mélange eau-éthanol 70/30 | 23 % | 23 % |
| Total mélange (1) | 65 % | 65 % |

L'efficacité des formulations D et E a été évaluée sur le même fuel de viscosite 1800 mPa.s à 10°C qu'utilisé précédemment, selon les tests IFP et WSL. Les résultats sont portés dans le tableau 2.

## Exemple 5

On prépare une formulation F ayant la composition suivante:

Mélange (1): 70 % poids, à savoir:

| | |
|---|---|
| - monooléate de sorbitol | 15 % poids |
| - monooléate de sorbitol polyéthoxylé (HLB 15) | 15 % poids |
| - hexaoléate de sorbitol polyéthoxylé (HLB 11,4) | 19 % poids |
| - di(éthyl-2 hexyl) sulfosuccinate de sodium en solution à 70 % poids dans un mélange eau-éthanol 70/30 | 21 % poids |

Mélange (2): 30 % poids, à savoir:

| | |
|---|---|
| - coupe pétroliére de l'exemple 2 | 24 % poids |
| - eau | 6 % poids |

Dans cette formulation, le di(éthyl-2 hexyl) sulfosuccinate de sodium représente, en poids de produit sec, 21 % du mélange (1).

L'efficacité de la formulation a été évaluée sur le même fuel de viscosité 1800 mPa.s à 10°C qu'utilisé précédemment, selon les tests IFP et WSL. Les résultats sont indiqués dans le tableau 2 ci-après.

**Tableau 2**

Efficacité

| | Test IFP | Test WSL |
|---|---|---|
| Formulation D | 45 % | 68 % |
| Formulation E | 44 % | 72 % |
| Formulation F | 51 % | 75 % |

Ces résultats montrent que les formulations D, E et F selon l'invention sont très efficaces notamment pour disperser un fuel visqueux.

**Revendications**

1. Composition dispersante caractérisée en ce qu'elle comprend:
- une proportion majeure d'un mélange (1) de composés tensio-actifs constitué essentiellement:
(a) d'au moins un monoester d'acide gras et de sorbitol;
(b) d'au moins un monoester d'acide gras et de sorbitol polyéthoxylé, le monoester (a) et le monoester (b) étant dans un rapport pondéral de 30:70 à 70:30;
(c) d'au moins un hexaester d'acide gras et de sorbitol polyéthoxylé, dans un rapport pondéral avec l'ensemble des monoesters (a) et (b) de 10:90 à 70:30; et
(d) d'au moins un dialkylsulfosuccinate de sodium représentant en poids de produit sec de 20 à 25 % dudit mélange (1);
- et une proportion mineure d'un mélange (2) constitué d'eau et d'au moins un solvant organique.

2. Composition dispersante selon la revendication 1, caractérisé en ce que, dans le mélange (1), le dialkylsulfosuccinate de sodium est mis en jeu sous la forme d'une solution hydroalcoolique à 65-75 % en poids.

3. Composition dispersante selon l'une des revendications 1 et 2, caractérisée en ce qu'elle comprend au plus 75 % en poids dudit mélange (1) et au moins 25 % en poids dudit mélange (2);
en ce que dans ledit mélange (1) les acides gras considérés dans les constituants (a), (b) et (c) renferment chacun de 12 à 22 atomes de carbone;
et en ce que dans ledit mélange (2), ledit solvant organique est choisi parmi les monoalkyléthers d'éthyléneglycol ou de polyéthylèneglycols et les liquides hydrocarbonés, le rapport pondéral de l'eau audit solvant étant de 50:50 à 10:90.

4. Composition dispersante selon la revendication 3, caractérisée en ce que, dans le mélange (1), le monoester (a) et le monoester (b) sont dans un rapport pondéral de 40:60 à 60:40, et l'hexaester (c) est avec l'ensemble des monoesters (a) et (b) dans un rapport pondéral de 20:80 à 50:50.

5. Composition dispersante selon l'une des revendications 1 à 4, caractérisée en ce que dans les monoesters (a) et/ou (b) et/ou dans l'hexaester (c), l'acide gras est, pour au moins 60 % en poids, constitué par de l'acide oléique.

6. Composition dispersante selon l'une des revendications 1 à 5, caractérisée en ce que, dans le mélange (1), le monoester de sorbitol polyéthoxylé (b) renferme environ 20 motifs oxyde d'éthylène par molécule.

7. Composition dispersante selon l'une des revendications 1 à 6, caractérisée en ce que, dans le mélange (1), l'hexaester de sorbitol polyéthoxylé (c) renferme un nombre de groupements éthoxy convenable pour que son HLB soit de 10 à 12.

8. Composition dispersante selon 1 une des revendications 1 à 7, caractérisée en ce que dans le mélange (1), le dialkylsufosuccinate de sodium (d) est le di(éthyl-2 hexyl) sulfosuccinate de sodium, en solution dans un mélange d'eau et d'un alcool choisi parmi l'éthanol et l'isopropanol.

9. Composition dispersante selon l'une des revendications 1 à 8, caractérisée en ce que, dans le mélange (2), le solvant est choisi parmi les éthers éthylique, propylique, isopropylique et butylique de l'éthylèneglycol ou du diéthylèneglycol.

10. Composition dispersante selon l'une des revendications 1 à 9, caractérisée en ce que, dans le mélange (2), le solvant est constitué par une coupe d'hydrocarbures discillant entre 200 et 250° C, présentant une densité d'environ 0,8 et une teneur en aromatiques d'au plus 5 %.

11. Méthode pour disperser une nappe d'hydrocarbures dans de l'eau, caractérisée en ce que l'on ajoute une composition selon l'une des revendications 1 à 10.


**Patentansprüche**

1. Dispergierzusammensetzung, dadurch <u>gekennzeichnet</u>, daß sie enthalt:
- einen größeren Anteil einer Mischung (1) von oberflächenaktiven Verbindungen, die im wesentlichen bestehen aus:
(a) zumindest einem Monoester von Fettsäure und Sorbit;
(b) zumindest einem Monoester von Fettsäure und polyethoxyliertem Sorbit, wobei der Monoester (a) und der Monoester (b) in einem Gewichtsverhältnis von 30:70 bis 70:30 vorliegen;
(c) zumindest einem Hexaester von Fettsäure und polyethoxyliertem Sorbit in einem Gewichtsverhältnis , bezogen auf die Gesamtheit der Monoester (a) und (b), von 10:90 bis 70:30; und
(d) zumindest einem Natriumdialkylsulfosuccinat, der im trockenen Produkt 20 bis 25 Gew.-% dieser Mischung (1) ausmacht;
und
- einen kleineren Anteil eines Gemisches (2), das aus Wasser und zumindest einem organischen Lösungsmittel besteht.

2. Dispergierzusammensetzung nach Anspruch 1, dadurch gekennzeichnet, daß im Gemisch (1) das Natriumdialkylsulfosuccinat in Form einer wässrig alkoholischen Lösung mit 65 bis 75 Gew.-% eingesetzt wird.

3. Dispergierzusammensetzung nach einem der Ansprüche 1 und 2, dadurch gekennzeichnet, daß sie höchstens 75 Gew.-% dieser Mischung (1) und mindestens 25 Gew.-% der Mischung (2) enthält; daß in der Mischung (1) die Fettsäuren in den Bestandteilen (a), (b) und (c) jeweils 12 bis 22 Kohlenstoffatome enthalten; und daß in der Mischung (2) das organische Lösungsmittel gewählt ist aus den Monoalkyläthern, von Ethylenglykol oder Polyethylenglykolen und den flüssigen Kohlenwasserstoffen, wobei das Gewichtsverhältnis von Wasser zu diesem Lösungsmittel 50:50 bis 10:90 beträgt.

4. Dispergierzusammensetzung nach Anspruch 3, dadurch gekennzeichnet, daß im Gemisch (1) der Monoester (a) und der Monoester (b) in einem Gewichtsverhältnis von 40:60 bis 60:40 und der Hexaester (c) bezüglich der Gesamtheit der Monoester (a) und (b) in einem Gewichtsverhältnis von 20:80 bis 50:50 vorliegen.

5. Dispergierzusammensetzung nach einem der Ansprüche 1 bis 4, dadurch gekennzeichnet, daß bei den Monoestern (a) und/oder (b) und/oder im Hexaester (c) die Fettsäure für zumindest 60 Gew.-% aus Ölsäure besteht.

6. Dispergierzusammensetzung nach einem der Ansprüche 1 bis 5, dadurch gekennzeichnet, daß im Gemisch (1) der polyethoxylierte Sorbitmonoester (b) etwa 20 Ethylenoxideinheiten pro Molekül enthält.

7. Dispergierzusammensetzung nach einem der Ansprüche 1 bis 6, dadurch gekennzeichnet, daß im Gemisch (1) der polyethoxylierte Sorbithexaester (c) eine geeignete Anzahl von Ethoxygruppen enthält, damit sein HLB-Wert 10 bis 12 beträgt.

8. Dispergierzusammensetzung nach einem der Ansprüche 1 bis 7, dadurch gekennzeichnet, daß im Gemisch (1) das Natriumdialkylsulfosuccinat (d) das Natrium-di-(2-ethylhexl)sulfosuccinat, in Lösung in einem Gemisch von Wasser und einem Alkohol aus der Gruppe Ethanol und Isopropanol ist.

9. Dispergierzusammensetzung nach einem der Ansprüche 1 bis 8, dadurch gekennzeichnet, daß im Gemisch (2) das Lösungsmit-Ethylenglykol oder Diethylenglykol gewählt wird.

10. Dispergierzusammensetzung nach einem der Ansprüche 1 bis 9, dadurch gekennzeichnet, daß im Gemisch (2) das Lösungsmittel aus einem Kohlenwasserstoffschnitt besteht, der zwischen 200 und 250° C destilliert und eine Dichte von etwa 0,8 und einen Aromatengehalt von höchstens 5 % aufweist.

11. Verfahren zum Dispergieren einer Schicht von Kohlenwasserstoffen in Wasser, dadurch gekennzeichnet, daß man eine Zusammensetzung nach einem der Ansprüche 1 bis 8 zufügt.


**Claims**

1. Dispersing composition characterized in that it comprises :
- a major proportion of a mixture (1) of surface-active compounds, consisting essentially of:

(a) at least one monoester of fatty acid and sorbitol;

(b) at least one monoester of fatty acid and polyethoxylated sorbitol, monoester (a) and monoester (b) being in a weight ratio of from 30:70 to 70:30;

(c) at least one hexaester of fatty acid and polyethoxylated sorbitol, in a weight ratio with respect to the whole amount of the monoesters (a) and (b) of from 10:90 to 90:10; and

(d) at least one sodium dialkylsulfosuccinate representing by weight of dry product from 20 to 25 % of said mixture (1);

- and a minor proportion of a mixture (2) comprised of water and at least one organic solvent.

2. A dispersing composition according to claim 1, characterized in that, in mixture (1), the sodium dialkylsulfosuccinate is introduced as a hydroalcoholic solution having a weight concentration 65-75 %.

3. A dispersing composition according to one of claims 1 and 2, characterized in that it comprises at most 75 % by weight of said mixture (1) and at least 25 % by weight of said mixture (2);

in that, in said mixture (1) the fatty acids involved in constituents (a), (b) and (c) contain each from 12 to 22 carbon atoms;

and in that, in said mixture (2), said organic solvent is selected from ethyleneglycol or polyethyleneglycol monoalkylethers and hydrocarbon liquids, the weight ratio of water to said solvent being from 50:50 to 10:90.

4. A dispersing composition according to claim 3, characterized in that, in mixture (1), monoester (a) and monoester (b) are in a weight ratio of from 40:60 to 60:40, and hexaester (c) is with the whole amount of the monoesters (a) and (b) in a weight ratio of from 20:80 to 50:50.

5. A dispersing composition according to one of claims 1 to 4, characterized in that in monoesters (a) and/or (b) and/or in hexaester (c), at least 60 % by weight of the fatty acid is comprised of oleic acid.

6. A dispersing composition according to one of claims 1 to 5, characterized in that, in mixture (1), the monoester of polyethoxylated sorbitol (b) contains about 20 ethylene oxide units per molecule.

7. A dispersing composition according to one of claims 1 to 6, characterized in that, in mixture (1), the hexaester of polyethoxylated sorbitol (c) contains a suitable number of ethoxy groups to impart to it a HLB value of from 10 to 12.

8. A dispersing composition according to one of claims 1 to 7, characterized in that, in mixture (1), the sodium dialkylsulfosuccinate (d) is sodium di-(2-ethylhexyl) sulfosuccinate, in solution in a mixture of water with an alcohol selected from ethanol and isopropanol.

9. A dispersing composition according to one of claims 1 to 8, characterized in that, in mixture (2), the solvent is selected from ethyl-, propyl-, isopropyl-, and butyl- ethers of ethyleneglycol or diethyleneglycol.

10. A dispersing composition according to one of claims 1 to 9, characterized in that, in mixture (2), the solvent is a hydrocarbon cut distillating between 200 and 250°C, having a density of about 0.8 and an aromatic content of at most 5 %.

11. A method for dispersing a hydrocarbon slick in water, characterized in that a composition according to one of claims 1 to 10 is added.